(19) Europäisches Patentamt / European Patent Office / Office européen des brevets

(11) **EP 3 449 286 B1**

(12) **EUROPÄISCHE PATENTSCHRIFT**

(45) Veröffentlichungstag und Bekanntmachung des Hinweises auf die Patenterteilung:
**11.12.2019   Patentblatt 2019/50**

(21) Anmeldenummer: **17717065.1**

(22) Anmeldetag: **29.03.2017**

(51) Int Cl.:
*G01S 19/14* (2010.01)          *G01S 19/53* (2010.01)
*A01B 79/00* (2006.01)          *G06Q 10/10* (2012.01)
*G07C 5/00* (2006.01)          *A01B 69/00* (2006.01)

(86) Internationale Anmeldenummer:
**PCT/AT2017/060079**

(87) Internationale Veröffentlichungsnummer:
**WO 2017/185114 (02.11.2017 Gazette 2017/44)**

(54) **VERFAHREN ZUM DETEKTIEREN LANDWIRTSCHAFTLICHER, VON EINEM FAHRZEUG AUSGEFÜHRTER FELDARBEIT**

METHOD FOR DETECTING AGRICULTURAL FIELD WORK PERFORMED BY A VEHICLE

PROCÉDÉ DE DÉTECTION DE TRAVAUX DES CHAMPS AGRICOLES EFFECTUÉS PAR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2016   AT 503712016**

(43) Veröffentlichungstag der Anmeldung:
**06.03.2019   Patentblatt 2019/10**

(73) Patentinhaber: **Farmdok GmbH**
**3250 Wieselburg (AT)**

(72) Erfinder: **PRANKL, Johann**
**3250 Wieselburg (AT)**

(74) Vertreter: **Weiser & Voith**
**Patentanwälte Partnerschaft**
**Kopfgasse 7**
**1130 Wien (AT)**

(56) Entgegenhaltungen:
**US-A1- 2008 249 692     US-A1- 2009 118 904**
**US-A1- 2011 054 729**

EP 3 449 286 B1

**Beschreibung**

Die vorliegende Erfindung betrifft ein Verfahren zum Detektieren landwirtschaftlicher, von einem Fahrzeug ausgeführter Feldarbeit. In weiterer Folge betrifft die Erfindung auch ein Verfahren zum Klassifizieren der detektierten Feldarbeit und zum automatischen Vermessen landwirtschaftlich bearbeiteter Felder.

Aus der US 2009/0118904 A1 ist ein Verfahren zum Planen des Pfades eines landwirtschaftlichen Fahrzeugs und anschließenden Steuern des Fahrzeugs auf dem geplanten Pfad bekannt.

Das automatische Detektieren, Klassifizieren und Vermessen von Feldarbeit ist für den Landwirt eine große Hilfe, u.zw. nicht nur zur automatischen Erstellung von Pflichtdokumentationen seiner Arbeit für wirtschaftliche Zwecke und Umweltschutz, sondern insbesondere auch zur Kontrolle der bisher am Feld durchgeführten Arbeiten und zur Planung der zukünftig durchzuführenden Feldarbeiten, sei es Pflügen, Grubbern, Eggen, Saatbeetbereiten, Anbau, Düngung, Pflanzenschutz, Mähen, Wenden, Schwaden, Ernten usw. Zu diesem Zweck ist es bekannt, landwirtschaftliche Fahrzeuge wie Traktoren, Mähdrescher usw. mit Satellitennavigationsempfängern auszustatten, welche die Fahrspur ("Trajektorie") des Fahrzeugs auf dem Feld aufzeichnen, um daraus die gewünschten Dokumentationen und Messungen zu erstellen. Zur Unterscheidung zwischen tatsächlicher Arbeit am Feld und bloßen An- und Abfahrten zum und vom Feld werden dabei üblicherweise digitale Landkarten verwendet, auf denen die Felder verzeichnet sind, um die Positionsbestimmungen ("Positionsfixe") des Satellitennavigationsempfängers einem in der Karte verzeichneten Feld zuzuordnen.

Die Erfindung setzt sich zum Ziel, ein Verfahren zum automatischen Detektieren von Feldarbeit zu schaffen, welches die Verwendung digitaler Landkarten erübrigt und auch in der Lage ist, bislang noch nicht verzeichnete Felder anhand der darauf verrichteten Feldarbeit zu detektieren und in weiterer Folge zu klassifizieren und zu vermessen.

Dieses Ziel wird gemäß einem ersten Aspekt der Erfindung mit einem Verfahren zum Detektieren landwirtschaftlicher, von einem Fahrzeug ausgeführter Feldarbeit erreicht, welches umfasst:

a) Mitführen eines Satellitennavigationsempfängers auf dem Fahrzeug und dabei Aufzeichnen einer Folge von Positionsfixen und zugehörigen Zeitstempeln des Satellitennavigationsempfängers;

b) für einen Positionsfix der Folge: Ermitteln einer Gruppe von Positionsfixen, die in einem vorgegebenen örtlichen Bereich um den betrachteten Positionsfix liegen;

c) Zerteilen der Gruppe in zumindest zwei Teilgruppen, von denen Positionsfixe der ersten Teilgruppe einen zeitlichen Mindestabstand zu Positionsfixen der zweiten Teilgruppe haben,

d) Ermitteln eines ersten Trajektorienstücks auf Basis zumindest zweier Positionsfixe der ersten Teilgruppe und eines zweiten Trajektorienstücks auf Basis zumindest zweier Positionsfixe der zweiten Teilgruppe;

e) Ermitteln eines Merkmalsvektors für den betrachteten Positionsfix umfassend zumindest einen Winkel zwischen dem ersten und dem zweiten Trajektorienstück; und,

f) wenn der Merkmalsvektor einem vorgegebenen Schwellwertkriterium umfassend einen Maximalwinkel genügt, Detektieren des Positionsfixes als Ort von Feldarbeit.

Erfindungsgemäß werden somit parallele Fahrmuster in der lokalen Umgebung eines Positionsfixes detektiert, um diesen entweder als einen Ort, an dem Feldarbeit verrichtet wird, zu detektieren oder nicht. Letzteres zeigt dann beispielsweise Transport- bzw. Straßenfahrten bei der An- oder Abfahrt zu bzw. von einem Feld an. Die erfindungsgemäße Detektion von Feldarbeit ermöglicht auch die Erkennung von Feldarbeit an neuen, erstmals bearbeiteten Feldern, ohne dass diese bereits in einer digitalen Karte verzeichnet sein müssen.

Das Verfahren der Erfindung kann beispielsweise mit einem mit dem Satellitennavigationsempfänger ausgestatteten herkömmlichen Smart-Phone durchgeführt werden, welches die Folge von Positionsfixen (den "Track") aufzeichnet und in der genannten Art und Weise auswertet. Alternativ und bevorzugt können aber auch nur Schritt a) mit einem mobilen Endgerät, z.B. Smart-Phone, und die Schritte b) bis f) in einem davon entfernten Server durchgeführt werden, welcher den vom Endgerät aufgezeichneten Track über z.B. eine Mobilfunkverbindung vom Endgerät enthält und mit hoher Serverrechenleistung auswertet.

Eine bevorzugte Ausführungsform der Erfindung zeichnet sich dadurch aus, dass - wenn der betrachtete Positionsfix Teil der ersten Teilgruppe ist - der Merkmalsvektor einen Normalabstand des betrachteten Positionsfixes zum nächstliegenden zweiten Trajektorienstück umfasst, und das Schwellwertkriterium auch einen Maximalabstand umfasst. Durch Einbeziehen des Abstandes zwischen den Trajektorienstücken in der Umgebung des untersuchten Ortes kann die Sicherheit der Detektion von Feldarbeit noch weiter erhöht werden. Dies beruht auf der Erkenntnis, dass der Abstand paralleler Fahrmuster auf einem Feld in der Regel durch die Arbeitsbreite des Feldbearbeitungsfahrzeugs bestimmt ist, beispielsweise die Pflugbreite eines Traktors, die Mähbreite eines Mähdreschers usw. Ein Positionsfix wird somit in dieser Ausführungsform als zu Feldarbeit zugehörig erkannt, wenn sowohl ausreichende Parallelität (Unterschreiten des Maximalwinkels) als auch ein für Feldarbeit realistischer Abstand zu den Nachbarfahrspuren (Unterschreiten des Maximalabstands) vorliegt.

Anhand des Normalabstands eines Positionsfixes zu seinem Nachbartrajektorienstück kann gemäß einem weiteren Merkmal der Erfindung auch die Art der dort verrichteten Feldarbeit bestimmt werden, d.h. die Feldarbeit klassifiziert werden. Beispielsweise sind eine große Arbeitsbreite des Fahrzeugs und damit ein großer Normalabstand für Feldarbeit wie Pflanzenschutz oder Düngen typisch, während eine geringe Arbeitsbreite und damit ein kleiner Normalabstand für kraftintensive Feldarbeit wie Pflügen oder Grubbern typisch sind.

In einer weiteren vorteilhaften Ausgestaltung der Erfindung kann - wenn der betrachtete Positionsfix Teil der ersten Teilgruppe ist - der Merkmalsvektor eine aus zumindest zwei Positionsfixen und zugehörigen Zeitstempeln der ersten Teilgruppe ermittelte Geschwindigkeit und das Schwellwertkriterium auch eine Maximalgeschwindigkeit umfassen. Das Über- bzw. Unterschreiten der Maximalgeschwindigkeit kann somit ein weiteres Unterscheidungsmerkmal für das Detektieren von Feldarbeit sein, welches in das Schwellwertkriterium einfließt. So wird bei An- und Abfahrten zum und vom Feld, d.h. bei Straßen- oder Transportfahrt, in der Regel eine höhere Geschwindigkeit gewählt als bei Feldarbeit.

In weiterer Folge kann die solcherart ermittelte Geschwindigkeit in Verbindung mit dem Normalabstand und damit der Arbeitsbreite des Fahrzeugs zur verbesserten Klassifikation der detektierten Feldarbeit herangezogen werden. Wenn beispielsweise sowohl Arbeitsbreite als auch übliche Fahrtgeschwindigkeit eines Pfluges, einer Egge, eines Düngemittelstreuers od.dgl. bekannt sind, kann aus dem ermittelten Normalabstand und der ermittelten Geschwindigkeit die Feldarbeit dementsprechend in Pflügen, Eggen, Düngen usw. klassifiziert werden.

Gemäß einem weiteren Aspekt der Erfindung umfasst das Verfahren:

Durchführen der Schritte b) bis f) für jeden Positionsfix der Folge; und
Erkennen mehrerer örtlich zusammenhängend benachbarter, jeweils als Ort von Feldarbeit detektierter Positionsfixe als landwirtschaftlich bearbeitetes Feld.

Auf diese Weise können nicht nur einzelne Orte von Feldarbeit detektiert werden, sondern ganze Felder. In weiterer Folge kann daraus beispielsweise die Fläche des erkannten Feldes berechnet werden, um landwirtschaftliche Tätigkeiten zu kontrollieren und zu planen, z.B. die Beschaffung und Ausbringung von flächenbezogenem Dünger, die Berechnung flächenbezogener Erträge des Feldes usw.

Aus mehreren im Zuge der Detektion des Feldes ermittelten Normalabständen kann dabei auch die Arbeitsbreite des Fahrzeugs gemittelt werden.

Eine verbesserte Ermittlung der Arbeitsbreite umfasst die optionalen Verfahrensschritte:

Unterteilen der Positionsfixe im Feld in zeitlich aufeinanderfolgende Fahrten von jeweils abwechselnder Fahrtrichtung;
Glätten der Positionsfixe im Feld in Hinblick auf eine Maximierung der Parallelität der Fahrten; und
Ermitteln einer Arbeitsbreite aus dem gegenseitigen Abstand zumindest zweier Fahrten.

Auf diese Weise wird die erwartete Parallelität der Fahrten auf dem Feld zur Beseitigung von Messfehlern der Satellitennavigationsbestimmung herangezogen, was eine verbesserte Genauigkeit des Verfahrens ergibt.

Die ermittelte Arbeitsbreite kann in weiterer Folge dazu verwendet werden, die Vermessung der Fläche des Feldes zu verbessern. Demgemäß umfasst eine weitere bevorzugte Ausführungsform des Verfahrens:

Ermitteln einer Kontur des Feldes;
Vergrößern der Kontur des Feldes um einen Anteil, bevorzugt um die Hälfte, der Arbeitsbreite; und
Berechnen der Fläche innerhalb der vergrößerten Kontur als Fläche des erkannten Feldes.

Diese Verbesserung beruht auf der Annahme, dass der Satellitennavigationsempfänger, beispielsweise ein Smart-Phone, vom Fahrer des Fahrzeugs etwa in der Mitte des Fahrzeugs mitgeführt wird, so dass die effektive Arbeitsbreite des Fahrzeugs davon nach links und rechts auskragt. Auch wenn die Fahrerkabine außermittig angeordnet ist, kann dies berücksichtigt werden, indem ein entsprechender Anteil der Arbeitsbreite jeweils zur Kontur hinzugerechnet wird, und zwar je nachdem, ob die Fahrerkabine in Fahrtrichtung des Fahrzeugs links oder rechts außermittig liegt.

Die durch Mittelung über das gesamte Feld oder aus einer Glättung der Positionsfixe ermittelte Arbeitsbreite kann wiederum zur Klassifikation der Feldarbeit herangezogen werden, z.B. auch in Verbindung mit einer Auswertung der Fahrtgeschwindigkeit wie oben beschrieben.

Die Erfindung wird nachstehend anhand von in den beigeschlossenen Zeichnungen dargestellten Ausführungsbeispielen näher erläutert. In den Zeichnungen zeigt

Fig. 1 die landwirtschaftliche Bearbeitung eines Feldes in Verbindung mit Komponenten des erfindungsgemäßen Verfahrens in einer schematischen Perspektivansicht;
Fig. 2 ein Flussdiagramm des Verfahrens der Erfindung;
Fig. 3 die lokale Umgebung eines der Positionsfixe auf dem Feld von Fig. 1 in einer schematischen Draufsicht mit weiteren Komponenten des Verfahrens der Erfindung; und
die Fig. 4a bis 4c beispielhafte Trajektorien und Feldkonturen in der Draufsicht in verschiedenen Phasen des Verfahrens der Erfindung.

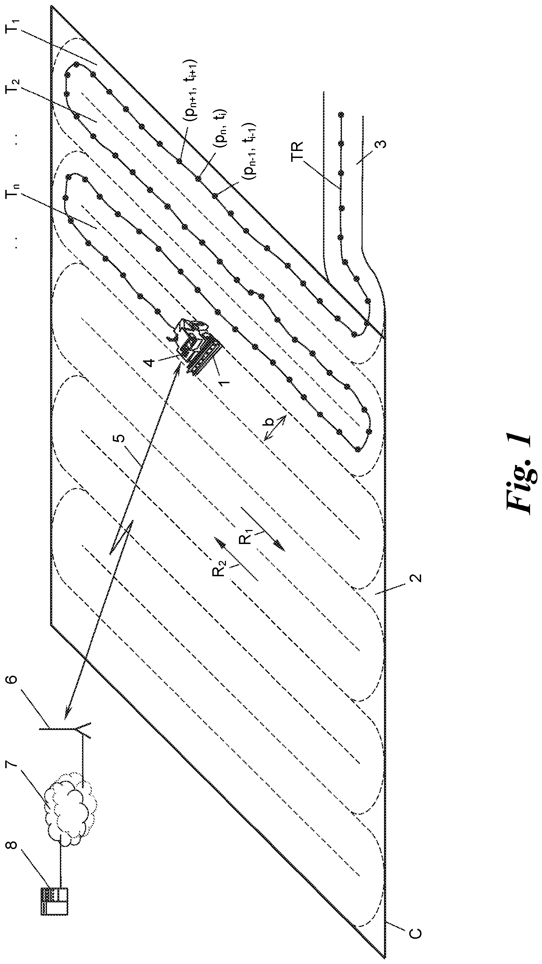

Fig. 1 zeigt ein landwirtschaftliches Fahrzeug 1, z.B. einen Traktor, Mähdrescher od.dgl., der auf einem Feld 2 landwirtschaftliche Feldarbeit verrichtet. Die Feldarbeit kann von jeder bekannten Art sein, beispielsweise eine Bodenbearbeitung oder Saatbettbereitung wie Pflügen, Grubbern, Eggen usw., ein Ausbringen von Saatgut, Düngemittel oder Pflanzenschutzmittel, ein Mähen, Wenden oder Schwaden, ein Ernten usw. Das Feld 2 wird dabei in zeitlich aufeinanderfolgenden Fahrten $T_1$, $T_2$, ..., allgemein $T_n$, mit jeweils abwechselnder Fahrtrichtung $R_1$ bzw. $R_2$ abgefahren, was insgesamt eine etwa schlangenlinien- bzw. mäanderförmige Trajektorie TR des Fahrzeugs 1 auf dem Feld 2 ergibt. Über einen Feldweg oder eine Straße, allgemein ein Straßennetz 3, erfolgt die Zu- und Abfahrt des Fahrzeugs 1 zum und vom Feld 2.

Das Fahrzeug 1 führt einen Satellitennavigationsempfänger 4 mit, der fortlaufend, beispielsweise mehrmals pro Sekunde oder alle paar Sekunden, seine Geoposition misst und als Positionsfixe $p_1$, $p_2$, ..., allgemein $p_i$, mit einem zugehörigen Zeitstempel $t_1$, $t_2$, ..., allgemein $t_i$ aufzeichnet. Die Folge FG = $\{(p_i, t_i)\}$ von Paaren von Positionsfixen $p_i$ und Zeitstempeln $t_i$ kennzeichnet somit die gesamte Trajektorie TR des Fahrzeugs 1, einschließlich seiner Fahrten auf dem Feld 2 und dem Straßennetz 3.

Der Satellitennavigationsempfänger 4 kann beispielsweise Bestandteil eines mobilen Endgeräts sein, z.B. eines Mobiltelefons oder Smart-Phones des Lenkers des Fahrzeugs 1, und vom Fahrzeuglenker mitgeführt werden; alternativ könnte der Satellitennavigationsempfänger 4 aber auch fest im Fahrzeug 1 verbaut sein.

Die Folge FG (der "Track" der Trajektorie TR) kann direkt im Satellitennavigationsempfänger 4 in der nachfolgend beschriebenen Art und Weise ausgewertet werden, z.B. in einem mit dem Satellitennavigationsempfänger 4 ausgestatteten Smart-Phone des Fahrzeugslenkers. Bevorzugt wird die aufgezeichnete Folge FG jedoch über eine Mobilfunkverbindung 5, ein Mobilfunknetz 6 und ein Datennetz 7, z.B. das Internet, an einen entfernten Server 8 zur Auswertung gesandt. Das Übersenden der Folge FG kann fortlaufend oder abschnittsweise in Tranchen oder auch nur auf Veranlassung einer entsprechend programmierten Applikation im Satellitennavigationsempfänger 4, auf Veranlassung des Fahrzeuglenkers oder auf Veranlassung eines Benutzers des Servers 8 erfolgen.

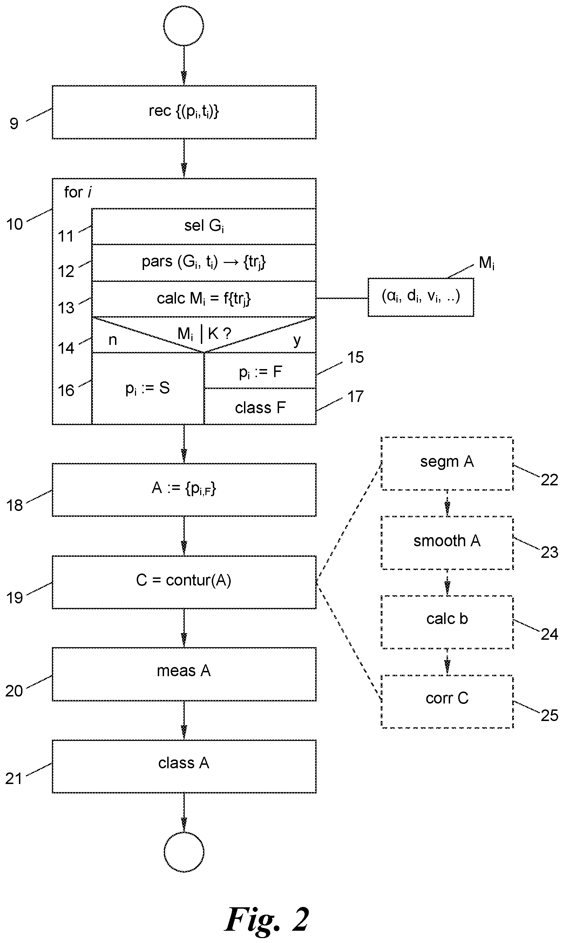

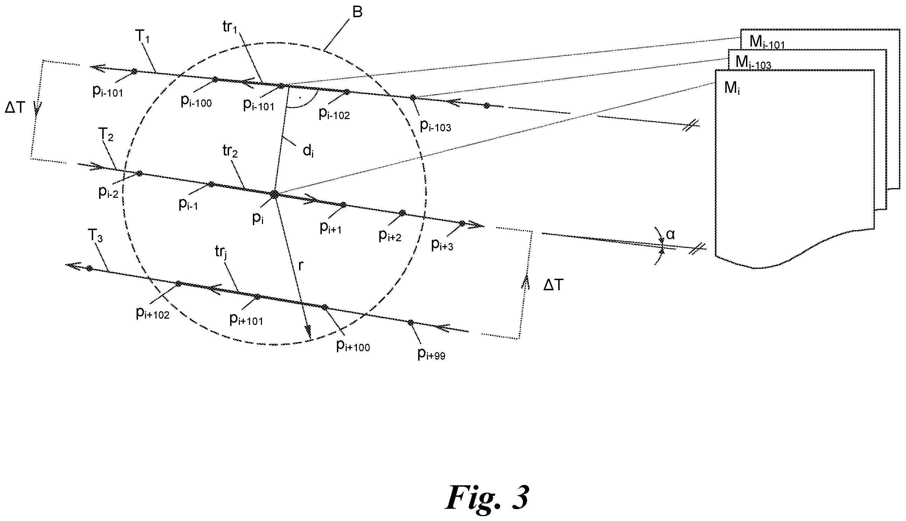

Unter gleichzeitiger Bezugnahme auf die Fig. 2 und 3 wird nun ein mit Hilfe des Satellitennavigationsempfängers 4 und/oder des Servers 8 ausgeführtes Verfahren zur Auswertung der Folge FG beschrieben, welches automatisch detektiert, ob das Fahrzeug 1 gerade Feldarbeit ausführt oder nicht. Aus der Detektion von Feldarbeit kann anschließend das Vorhandensein eines Feldes 2 in der Landschaft erkannt und dieses auch vermessen werden. Schließlich wird beschrieben, wie die Art der vom Fahrzeug 1 ausgeführten Feldarbeit am Feld 2 automatisch klassifiziert werden kann, um landwirtschaftliche Dokumentations-, Kontroll- und Planungszwecke zu erfüllen.

Gemäß Fig. 2 wird in einem ersten Schritt 9 die Folge FG wie soeben beschrieben aufgezeichnet. Anschließend wird in einer Schleife 10 für jeden Positionsfix $p_i$ der Folge FG untersucht, ob dieser ein Ort ist, an dem Feldarbeit verrichtet wird oder nicht.

Dazu wird im ersten Teilschritt 12 der Schleife 10 gemäß Fig. 3 ein lokaler Bereich B um den jeweils betrachteten Positionsfix $p_i$ der Folge FG gezogen. Der Bereich B kann beliebige Form haben, z.B. die Form eines Quadrats, Rechtecks, einer Ellipse oder eines Kreises. Die Größe des Bereichs B, z.B. bei einem kreisförmigen Bereich sein Radius r, wird dabei bevorzugt etwas größer gewählt als die maximal erwartete Arbeitsbreite b des Fahrzeugs 1.

Alle Positionsfixe $p_i$ der Folge FG, die in dem Bereich B liegen, bilden eine Gruppe $G_i$ von Positionsfixen, im vorliegenden Beispiel die Gruppe $G_i$ $\{p_{i-102}, p_{i-101}, p_{i-100}, p_{i-2}, p_{i-1}, p_i, p_{i+1}, p_{i+2}, p_{i+100}, p_{i+101}, p_{i+102}\}$.

Im nächsten Teilschritt 12 wird nun die Gruppe $G_i$ unter Verwendung der Zeitstempel $t_i$ der darin enthaltenen Positionsfixe $p_i$ in (zumindest) zwei Teilgruppen, hier die drei Teilgruppen $\{P_{i-102}, P_{i-101}, P_{i-100}\}$, $\{p_{i-2}, p_{i-1}, p_i, p_{i+1}, p_{i+2}\}$ und $\{p_{i+100}, p_{i+101}, p_{i+102}\}$ zerlegt ("parsing"), wobei das Zerteilungskriterium darin besteht, dass der zeitliche Abstand $t_{i+1} - t_i$ zwischen zwei zeitlich aufeinanderfolgenden Positionsfixen $p_{i+1}$ und $p_i$ einen vorgegebenen zeitlichen Mindestabstand $\Delta T$ übersteigt. Mit anderen Worten unterscheiden sich alle Positionsfixe einer Teilgruppe um mindestens den zeitlichen Abstand $\Delta T$ von allen Positionsfixen einer anderen Teilgruppe. Optional kann auch ein zeitlicher Maximalabstand überprüft werden, d.h. Positionsfixe, die einen zu großen zeitlichen Abstand zu dem betrachteten Positionsfix $p_i$ haben, werden ausgeschieden und nicht mehr weiter berücksichtigt.

Diese Zerlegung der Folge FG und damit der Trajektorie TR beruht auf der Annahme, dass im Bereich B die Positionsfixe $p_i$ aus Nachbarfahrten $T_{n\pm1}$ auf dem Feld 2 jeweils einen signifikant größeren Zeitabstand zum betrachteten Positionsfix $p_i$ haben als die Positionsfixe derselben Fahrt $T_n$, in der der betrachtete Positionsfix $p_i$ liegt.

Anschließend wird im Schritt 12 aus jeder Teilgruppe ein Trajektorienstück $tr_1$, $tr_2$, ..., allgemein $tr_j$, gebildet, beispielsweise einfach durch Aufstellen einer Verbindungslinie oder -kurve zwischen zwei (oder mehr) aufeinanderfolgenden Positionsfixen $p_i$ der jeweiligen Teilgruppe.

Im Ergebnis wird in Schritt 12 somit eine Menge $\{tr_j\}$ von Trajektorienstücken $tr_1$, $tr_2$, ... allgemein $tr_j$, im Bereich B rund um den betrachteten Positionsfix $p_i$ erhalten.

Im anschließenden Teilschritt 13 werden aus der Menge $\{tr_j\}$ von Trajektorienstücken $tr_j$ Merkmale für den betrachteten Positionsfix $p_i$ extrahiert und zu einem Merkmalsvektor $M_i$ zusammengefasst. Der Merkmals-

vektor $M_i$ des Positionsfixes $p_i$ kann dabei insbesondere einen oder mehrere der folgenden Werte enthalten:

- einen Winkel $\alpha_i$ zwischen einem beliebigen ersten Trajektorienstück $tr_j$ im Bereich B und einem beliebigen zweiten Trajektorienstück $tr_2$ im Bereich B, insbesondere zwischen dem den Positionsfix $p_i$ enthaltenden Trajektorienstück $tr_2$ und einem benachbarten Trajektorienstück $tr_j$;
- einen Normalabstand $d_i$ des betrachteten Positionsfixes $p_i$ zum nächstgelegenen Trajektorienstück $tr_j$;
- eine Geschwindigkeit $v_i$, ermittelt aus beispielsweise zwei aufeinanderfolgenden Positionsfixen $p_i$, $p_{i+1}$ und zugehörigen Zeitstempeln $t_i$, $t_{i+1}$;
- eine Dichte oder Dichteverteilung der Positionsfixe der Gruppe $G_i$ im Bereich B.

In einem anschließenden Schritt 14 wird nun überprüft, ob der Merkmalsvektor $M_i$ des betrachteten Positionsfixes $p_i$ einem vorgegebenen Schwellwertkriterium K genügt ("y") oder nicht ("n"). Das Schwellwertkriterium K umfasst dabei - entsprechend dem jeweiligen Inhalt des Merkmalvektors $M_i$ - eines oder mehrere der folgenden Teilkriterien:

- einen Maximalwinkel $\alpha_{max}$, unterhalb dessen der Winkel $\alpha_i$ liegen muss, damit das Schwellwertkriterium K erfüllt ist; der Maximalwinkel $\alpha_{max}$ steht dabei für ein Mindestmaß an Parallelität, das zwei benachbarte Trajektorienstücke $tr_j$ im Bereich B haben müssen;
- einen Maximalabstand $d_{max}$, unterhalb dessen der Normalabstand $d_i$ liegen muss, damit das Schwellwertkriterium K erfüllt ist; der Maximalabstand $d_{max}$ steht dabei für eine erwartete maximale Arbeitsbreite b des Fahrzeugs 1;
- eine Maximalgeschwindigkeit $v_{max}$, unterhalb der die Geschwindigkeit $v_i$ liegen muss, damit das Schwellwertkriterium K erfüllt ist; dies beruht auf der Annahme, dass Arbeit am Feld 2 mit geringerer Geschwindigkeit ausgeführt wird als Zu- und Abfahrten auf dem Straßennetz 3;
- eine minimale oder maximale Punktdichte oder Punktdichteverteilung, welche die Positionsfixe der Gruppe $G_i$ haben müssen, damit das Schwellwertkriterium K erfüllt ist.

Im einfachsten Fall umfasst der Merkmalsvektor $M_i$ nur den Winkel $\alpha_i$ und das Schwellwertkriterium K nur den Maximalwinkel $\alpha_{max}$; in komplexerer Ausgestaltung umfasst der Merkmalsvektor $M_i$ zunehmend mehr der genannten Merkmale und das Schwellwertkriterium K dementsprechend zunehmend mehr der genannten Teilkriterien.

Wenn der Merkmalsvektor $M_i$ in Schritt 14 das Schwellwertkriterium K erfüllt (Zweig "y"), dann wird in Schritt 15 der Positionsfix $p_i$ als Ort von Feldarbeit "F" detektiert. Andernfalls wird der Positionsfix $p_i$ als Ort von

Straßenfahrt "S" detektiert (Schritt 16).

Im Falle von detektierter Feldarbeit ("F") kann diese in einem optionalen Schritt 17 klassifiziert, d.h. nach ihrer Art unterschieden werden, ob es sich beispielsweise um Pflügen, Eggen, Grubbern, Düngen, Mähen, Ernten usw. handelt. Dazu wird der Merkmalsvektor $M_i$ weiter ausgewertet, beispielsweise anhand des darin enthaltenen Normalabstands $d_i$ und/oder der Geschwindigkeit $v_i$. Sind z.B. die Arbeitsbreite b eines Pflugs des Fahrzeugs 1 und dessen Arbeitsgeschwindigkeit bekannt, kann die Feldarbeit "Pflügen" anhand eines - innerhalb vorgegebener Toleranzen - übereinstimmenden Normalabstands $d_i$ und einer dazu - innerhalb vorgegebenen Toleranzen - übereinstimmenden Geschwindigkeit $v_i$ erkannt werden.

Nach Abarbeitung der Schleife 10 mit den Teilschritten 11 - 17 ist für jeden Positionsfix $p_i$ der Folge FG bzw. Trajektorie TR ein Detektionsergebnis erzielt worden, ob dieser Positionsfix $p_i$ ein Ort von Feldarbeit F ist oder nicht. In Schritt 18 werden nun jeweils mehrere örtlich zusammenhängend benachbarte, als Ort von Feldarbeit F detektierte Positionsfixe $p_i$, im weiteren als $P_{i,F}$ bezeichnet, als ein zusammenhängendes Feld A (hier: das Feld 2) erkannt. Es versteht sich, dass aus einer gesamten Trajektorie TR des Fahrzeugs 1, wenn dieses beispielsweise mehrere Felder 2 nacheinander abarbeitet, auch mehrere jeweils voneinander gesonderte Felder A erkannt werden können.

Sobald in Schritt 18 ein Feld A bestimmt worden ist, kann anschließend in einem Schritt 19 eine die Positionsfixe $\{P_{i,F}\}$ des Feldes A umhüllende Kontur C des Feldes A ermittelt werden. Dazu eignen sich jegliche in der Technik bekannten Umriss- bzw. Kontursuchalgorithmen, wie eine gewichtete Minimalpfadsuche nach Edsger W. Dijkstra, "A note on two problems in connexion with graphs", Numerische Mathematik, 1, 1959, S. 269-271; oder die Berechnung einer konkaven Hülle mittels Alpha-Shapes nach N. Akkiraju, H. Edelsbrunner, M. Facello, P. Fu, E.P. Mucke, and C. Varela, "Alpha shapes: definition and software", Proc. Internat. Comput. Geom. Software Workshop 1995, Minneapolis; oder eine Nachbarschaftssuche mittels KD-Tree FLANN nach Marius Muja and David G. Lowe, "Scalable Nearest Neighbor Algorithms for High Dimensional Data", Pattern Analysis and Machine Intelligence (PAMI), Band 36, 2014.

Mit Hilfe der in Schritt 19 ermittelten Kontur C des Feldes A kann in Schritt 20 anschließend die Fläche des Feldes A berechnet werden. In einem abschließenden Schritt 21, der alternativ oder zusätzlich zu Schritt 17 möglich ist, kann die gesamte im Feld A verrichtete Feldarbeit klassifiziert werden, beispielsweise anhand eines Mittelwerts der Normalabstände $d_i$ und/oder eines Mittelwerts der Geschwindigkeiten $v_i$ der Merkmalsvektoren $M_i$ aller Positionsfixe $P_{i,F}$ des Feldes A. Der Mittelwert der Normalabstände $d_i$ kann dabei auch als Messwert der Arbeitsbreite b des Fahrzeugs 1 herangezogen werden.

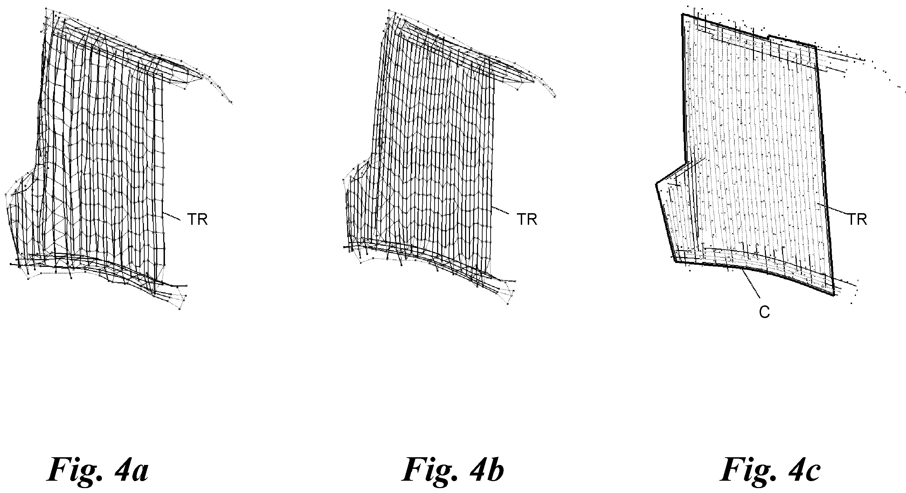

Eine optionale Verfahrensvariante zur Ermittlung des Kontur C des Feldes A mit verbesserter Genauigkeit ist in Fig. 2 strichliert dargestellt und wird unter gleichzeitiger Bezugnahme auf die Fig. 4a bis 4c im Folgenden beschrieben.

Fig. 4a zeigt eine beispielhafte Trajektorie TR von Positionsfixen $p_i$ in Gitternetzdarstellung, wobei von den Positionsfixen $p_{i,F}$ im Feld A nicht nur die jeweils aufeinanderfolgenden Positionsfixe $P_{i,F}$, sondern auch die in nebeneinanderliegenden Fahrten $T_n$ bzw. Trajektorienstücken $tr_j$ liegenden Positionsfixe $p_{i,F}$ mit Gitternetzlinien verbunden wurden.

In einem ersten Schritt 22 werden die Positionsfixe $p_{i,F}$ im Feld A in zeitlich aufeinanderfolgende Fahrten $T_n$ von jeweils abwechselnder Fahrtrichtung $R_1$, $R_2$ unterteilt. Optional können Wendepunkte bzw. Wendebereiche zwischen den Fahrten $T_n$ detektiert und auf die Fahrten $T_n$ entsprechend aufgeteilt werden. Anschließend werden in Schritt 23 die Positionsfixe $p_i$ im Hinblick auf eine Maximierung der Parallelität der Fahrten $T_n$ geglättet, d.h. jeweils individuell so unter Minimierung eines Fehlermaßes $e_i$ positionsverschoben, dass die Fahrten $T_n$ mit möglichst gleichen Normalabständen $d_i$ möglichst parallel nebeneinanderliegen. Das Ergebnis des Glättungsschrittes 23 ist in Fig. 4b gezeigt.

Der Glättungsschritt 23 kann beispielsweise durch Anwendung eines Levenberg-Marquardt (LM) Verfahrens nach Jorge J. Moré, "The Levenberg-Marquardt algorithm: Implementation and theory", in G.A. Watson (ed.) "Numerical Analysis", Dundee 1977, Lecture Notes Math. 630, 1978, S. 105-116, durchgeführt werden. Für jeden zu korrigierenden Positionsfix $p_i$ wird ein zu optimierender Parameterpunkt P hinzugefügt. Als weitere Parameter dienen die Arbeitsbreite b und ein Offset $d_o$ zur Mittellinie des Fahrzeugs 1. Das zu optimierende System besteht somit aus folgenden Gleichungen (zur einfacheren Lesbarkeit wird auf das Anschreiben der Indizes für Punkte und Vektoren im Gleichungssystem verzichtet):

$$P_O = P + d_O$$

$$e_P = \| P_O - p \|$$

$$e_s = w_s (\| r \times (P_n - P) \|)$$

$$e_n = w_n (\| r \times (P_l - P) \| - b)$$

$P_0$ ist dabei der um den Offset korrigierte Punkt P, r der zum Punkt P gehörige Richtungsvektor, $P_n$ der in der Trajektorie TR folgende Punkt, $P_l$ der nächstgelegene Punkt im parallelen Trajektorienstück und $w_s$ und $w_n$ sind Gewichtungsfaktoren. Die Fehler $e_P$, $e_s$ und $e_n$ bilden

das zu minimierende Fehlerfunktional

$$\min \sum_A (e_p + e_s + e_n)^2$$

Im Zuge dieser Optimierung werden somit die Positionsfixe $p_{i,F}$ geglättet, um einen Offset $d_o$ zur Fahrzeugmitte korrigiert und die Arbeitsbreite b geschätzt. Fig. 4b zeigt das Ergebnis. Als Ergebnis der Optimierungskorrektur in Schritt 23 ergibt sich gleichzeitig eine optimiert berechnete Arbeitsbreite b im Feld A (Schritt 24).

Es versteht sich, dass die Optimierung des Schrittes 23 auch schon zuanfangs an allen Positionsfixen $p_i$ der Folge FG durchgeführt werden kann, bevor diese in der Schleife 10 auf Feldarbeit überprüft werden, d.h. Schritt 23 kann alternativ oder zusätzlich auch unmittelbar nach dem Schritt 9 durchgeführt werden.

Mit Hilfe der optimiert berechneten Arbeitsbreite b wird schließlich in Schritt 25 die Kontur C des Feldes A korrigiert, wie sie beispielsweise mit Hilfe der vorgenannten Dijkstra-, Alpha-Shape- oder Kd-Tree-Verfahren ermittelt wurde. Dabei wird die Kontur C um einen Anteil der Arbeitsbreite b vergrößert, welcher der Tatsache Rechnung trägt, dass der Satellitennavigationsempfänger 4 innerhalb der Arbeitsbreite b des Fahrzeugs 1 meist in der Fahrzeugmitte liegt. Wenn der Satellitennavigationsempfänger 4 in der Fahrzeugmitte liegt, dann wird die Kontur C über ihren gesamten Umfang um b/2 vergrößert; liegt der Satellitennavigationsempfänger 4 beispielsweise in einem Abstand von b/3 vom in Fahrtrichtung gesehen rechten Arbeitsrand des Fahrzeugs 1, dann wird die Kontur C an jenen Umfangsorten, wo sich das Fahrzeug 1 gegen den Uhrzeigersinn entlang der Kontur C bewegt, um b/3 vergrößert, und an jenen Umfangsorten, wo sich das Fahrzeug im Uhrzeigersinn entlang der Kontur C bewegt, um 2b/3. Optional können bei der Korrektur der Kontur C auch Wendepunkte zwischen den Fahrten $T_n$ detektiert und mitberücksichtigt werden.

Durch die Glättung der Positionsfixe $p_i$ im Hinblick auf eine größtmögliche Parallelität der Fahrten $T_n$ und einen möglichst gleichmäßigen Normalabstand $d_i$ über die Trajektorie TR im Feld A wird eine Verbesserung der Positionsbestimmung erreicht, die es erlaubt, genaue Feldvermessungen mit Hilfe einfacher handelsüblicher Satellitennavigationsempfänger durchzuführen, ohne auf Präzisions-Positionsbestimmungssysteme wie dGPS (differential GPS) oder RTK (Real Time Kinematics) zurückzugreifen.

Die Erfindung ist demgemäß nicht auf die dargestellten Ausführungsformen beschränkt, sondern umfasst alle Varianten, Modifikationen und deren Kombinationen, die in den Rahmen der angeschlossenen Ansprüche fallen.

**Patentansprüche**

1. Verfahren zum Detektieren landwirtschaftlicher, von einem Fahrzeug (1) ausgeführter Feldarbeit, umfassend:

    a) Mitführen eines Satellitennavigationsempfängers (4) auf dem Fahrzeug (1) und dabei Aufzeichnen einer Folge (FG) von Positionsfixen ($p_i$) und zugehörigen Zeitstempeln ($t_i$) des Satellitennavigationsempfängers;
    b) für einen Positionsfix ($p_i$) der Folge: Ermitteln einer Gruppe ($G_i$) von Positionsfixen, die in einem vorgegebenen örtlichen Bereich (B) um den betrachteten Positionsfix ($p_i$) liegen;
    c) Zerteilen der Gruppe ($G_i$) in zumindest zwei Teilgruppen, von denen Positionsfixe der ersten Teilgruppe einen zeitlichen Mindestabstand ($\Delta T$) zu Positionsfixen der zweiten Teilgruppe haben,
    d) Ermitteln eines ersten Trajektorienstücks ($tr_1$) auf Basis zumindest zweier Positionsfixe der ersten Teilgruppe und eines zweiten Trajektorienstücks ($tr_2$) auf Basis zumindest zweier Positionsfixe der zweiten Teilgruppe;
    e) Ermitteln eines Merkmalsvektors ($M_i$) für den betrachteten Positionsfix ($p_i$) umfassend zumindest einen Winkel ($\alpha_i$) zwischen dem ersten und dem zweiten Trajektorienstück ($tr_i$, $tr_2$); und,
    f) wenn der Merkmalsvektor ($M_i$) einem vorgegebenen Schwellwertkriterium (K) umfassend einen Maximalwinkel ($\alpha_{max}$) genügt, Detektieren des Positionsfixes ($p_i$) als Ort von Feldarbeit (F).

2. Verfahren nach Anspruch 1, **dadurch gekennzeichnet, dass** der betrachtete Positionsfix ($p_i$) Teil der ersten Teilgruppe ist, der Merkmalsvektor ($M_i$) einen Normalabstand ($d_i$) des betrachteten Positionsfixes ($p_i$) zum nächstliegenden zweiten Trajektorienstück ($tr_j$) umfasst, und das Schwellwertkriterium (K) auch einen Maximalabstand ($d_{max}$) umfasst.

3. Verfahren nach Anspruch 2, ferner umfassend das Klassifizieren der detektierten Feldarbeit (F) anhand zumindest des Normalabstands ($d_i$).

4. Verfahren nach einem der Ansprüche 1 bis 3, **dadurch gekennzeichnet, dass** der betrachtete Positionsfix ($p_i$) Teil der ersten Teilgruppe ist, der Merkmalsvektor ($M_i$) eine aus zumindest zwei Positionsfixen und zugehörigen Zeitstempeln der ersten Teilgruppe ermittelte Geschwindigkeit ($v_i$) umfasst, und das Schwellwertkriterium (K) auch eine Maximalgeschwindigkeit ($v_{max}$) umfasst.

5. Verfahren nach Anspruch 4, ferner umfassend das Klassifizieren der detektierten Feldarbeit (F) anhand zumindest des Normalabstands ($d_i$) und der Geschwindigkeit ($v_i$).

6. Verfahren nach einem der Ansprüche 1 bis 5, umfassend:

    Durchführen der Schritte b) bis f) für jeden Positionsfix ($p_i$) der Folge (FG); und
    Erkennen mehrerer örtlich zusammenhängend benachbarter, jeweils als Ort von Feldarbeit detektierter Positionsfixe ($P_{i,F}$) als landwirtschaftlich bearbeitetes Feld (2).

7. Verfahren nach Anspruch 6, ferner umfassend das Berechnen der Fläche des erkannten Feldes (2).

8. Verfahren nach Anspruch 6 in Verbindung mit Anspruch 2, **dadurch gekennzeichnet, dass** aus mehreren Normalabständen ($d_i$) eine Arbeitsbreite (b) des Fahrzeugs (1) gemittelt wird.

9. Verfahren nach Anspruch 6, ferner umfassend:

    Unterteilen der Positionsfixe ($p_i$) im Feld (2) in zeitlich aufeinanderfolgende Fahrten ($T_n$) von jeweils abwechselnder Fahrtrichtung ($R_1$, $R_2$);
    Glätten der Positionsfixe ($P_{i,F}$) im Feld (2) in Hinblick auf eine Maximierung der Parallelität der Fahrten ($T_n$); und
    Ermitteln einer Arbeitsbreite (b) aus dem gegenseitigen Abstand zumindest zweier Fahrten ($T_n$).

10. Verfahren nach Anspruch 8 oder 9, ferner umfassend:

    Ermitteln einer Kontur (C) des Feldes (2);
    Vergrößern der Kontur (C) des Feldes (2) um einen Anteil, bevorzugt um die Hälfte, der Arbeitsbreite (b); und
    Berechnen der Fläche innerhalb der vergrößerten Kontur als Fläche des erkannten Feldes (2).

11. Verfahren nach einem der Ansprüche 8 bis 10, ferner umfassend das Klassifizieren des Feldes (2) zumindest anhand der ermittelten Arbeitsbreite (b).

12. Verfahren nach einem der Ansprüche 1 bis 11, **dadurch gekennzeichnet, dass** Schritt a) mit einem mobilen Endgerät (4) und die Schritte b) bis f) in einem davon entfernten Server (8) durchgeführt werden, welcher die Folge (FG) über eine Mobilfunkverbindung (5) vom Endgerät (4) erhält.

**Claims**

1. Method for detecting agricultural field work performed by a vehicle (1), comprising:

a) carrying a satellite navigation receiver (4) on the vehicle (1) while recording a sequence (FG) of position fixes ($p_i$) and corresponding time stamps ($t_i$) of the satellite navigation receiver;

b) for a position fix ($p_i$) of the sequence: determining a group ($G_i$) of position fixes which lie in a predetermined local region (B) around the considered position fix ($p_i$);

c) dividing the group ($G_i$) into at least two subgroups in which position fixes of the first subgroup have a minimum time interval ($\Delta T$) relative to position fixes of the second subgroup,

d) determining a first trajectory portion ($tr_1$) based on at least two position fixes of the first subgroup and a second trajectory portion ($tr_2$) based on at least two position fixes of the second subgroup;

e) determining a feature vector ($M_i$) for the considered position fix ($p_i$) comprising at least an angle ($\alpha_i$) between the first and the second trajectory portion ($tr_1$, $tr_2$); and,

f) when the feature vector ($M_i$) fulfils a predetermined threshold criterion (K) comprising a maximum angle ($\alpha_{max}$), detecting the position fix ($p_i$) as a location of field work (F).

2. Method according to claim 1, **characterized in that** the considered position fix ($p_i$) is part of the first subgroup, the feature vector ($M_i$) comprises a normal distance ($d_i$) of the considered position fix ($p_i$) to the closest second trajectory portion ($tr_j$) and the threshold criterion (K) also comprises a maximum distance ($d_{max}$).

3. Method according to claim 2, further comprising the classification of the detected field work (F) by means of at least the normal distance ($d_i$).

4. Method according to any one of the claims 1 to 3, **characterized in that** the considered position fix ($p_i$) is part of the first subgroup, the feature vector ($M_i$) comprises a velocity ($v_i$) determined at least from two position fixes and corresponding time stamps of the first subgroup, and the threshold criterion (K) also comprises a maximum velocity ($v_{max}$).

5. Method according to claim 4, further comprising the classification of the detected field work (F) by means of at least the normal distance ($d_i$) and the velocity ($v_i$).

6. Method according to any one of the claims 1 to 5, comprising:

performing the steps b) to f) for each position fix ($p_i$) of the sequence (FG); and

identifying several contiguously neighbouring position fixes ($P_{i,F}$), each of which has been detected as a location of field work as an agriculturally worked on field (2).

7. Method according to claim 6, further comprising the calculation of the area of the identified field (2).

8. Method according to claim 6 in combination with claim 2, **characterized in that** a working width (b) of the vehicle (1) is averaged from several normal distances ($d_i$).

9. Method according to claim 6, further comprising:

partitioning the position fixes ($p_i$) in the field (2) into time-successive runs ($T_n$) of respective alternating directions ($R_1$, $R_2$);

smoothing the position fixes ($P_{i,F}$) in the field (2) with respect to a maximization of the parallelism of the runs ($T_n$); and

determining a working width (b) from the mutual distance of at least two runs ($T_n$).

10. Method according to claim 8 or 9, further comprising:

determining a contour (C) of the field (2);

increasing the contour (C) of the field (2) by a proportion, preferably the half, of the working width (b); and

calculating the area within the increased contour as the area of the identified field (2).

11. Method according to any one of the claims 8 to 10, further comprising the classification of the field (2) by means of at least the determined working width (b).

12. Method according to any one of the claims 1 to 11, **characterized in that** step a) is performed with a mobile terminal (4) and steps b) to f) are performed in a server (8) remote therefrom which receives the sequence (FG) via a mobile radio connection (5) from the terminal (4).

## Revendications

1. Méthode de détection d'un travail agricole effectué par un véhicule (1) comprenant :

a) l'intégration d'un récepteur de navigation par satellite (4) sur le véhicule (1) et l'enregistrement d'une suite (FG) de repères de position et d'horodateurs associés ($t_i$) du récepteur de navigation par satellite ;

b) pour un repère de position ($p_i$) de la suite : Détermination d'un groupe ($G_i$) de repères de

position situés dans une zone locale (B) prédéfinie autour du repère de position ($p_i$) considéré;

c) la division du groupe ($G_i$) en au moins deux sous-groupes, dont les repères de position du premier sous-groupe ont un intervalle de temps minimum ($\Delta T$) par rapport aux repères de position du second sous-groupe,

d) la détermination d'un premier bout de trajectoire ($tr_1$) sur la base d'au moins deux repères de position du premier sous-groupe et d'un deuxième bout de trajectoire ($tr_2$) sur la base d'au moins deux repères de position du deuxième sous-groupe ;

e) la détermination d'un vecteur de caractéristique ($M_i$) pour le repère de position ($p_i$) considéré comprenant au moins un angle ($\alpha_i$) entre lesdits premier et second bout de trajectoire ($tr_1$, $tr_2$);) et,

f) lorsque le vecteur de caractéristique ($M_i$) satisfait à un critère de seuil prédéterminé (K) comprenant un angle maximal ($\alpha_{max}$), la détection du repère de position ($p_i$) comme emplacement du travail sur le champ (F).

2. Méthode selon la revendication 1, **caractérisée en ce que** le repère de position ($p_i$) considéré fait partie du premier sous-groupe, le vecteur de caractéristique ($M_i$) comprend une distance normale ($d_i$) du repère de position ($p_i$) considéré par rapport au deuxième bout de trajectoire ($tr_j$) le plus proche, et le critère de seuil (K) comprend également une distance maximale ($d_{max}$).

3. Méthode selon la revendication 2, comprenant en outre la classification du travail agricole détecté (F) sur la base d'au moins la distance normale ($d_i$).

4. Méthode selon l'une des revendications 1 à 3, **caractérisée en ce que** le repère de position ($p_i$) considéré fait partie du premier sous-groupe, le vecteur caractéristique ($M_i$) comprend une vitesse ($v_i$) déterminée à partir d'au moins deux repères de position et des horodateurs associés du premier sous-groupe, et le critère de seuil (K) comprend aussi une vitesse maximale ($v_{max}$).

5. Méthode selon la revendication 4, comprenant en outre la classification du travail agricole détecté (F) à partir d'au moins la distance normale ($d_i$) et la vitesse ($v_i$).

6. Méthode selon l'une des revendications 1 à 5 comprenant :

l'exécution des étapes b) à f) pour chaque repère de position ($p_i$) de la suite (FG) ; et
la détection de plusieurs repères de position ($P_{i,F}$) adjacents chacun détecté comme emplacement du travail, comme champ cultivé en agriculture (2).

7. Méthode selon la revendication 6, comprenant en outre le calcul de la surface du champ détecté (2).

8. Méthode selon la revendication 6 en combinaison avec la revendication 2, **caractérisée en ce qu'**une largeur de travail (b) du véhicule (1) est moyennée à partir de plusieurs distances normales ($d_i$).

9. Méthode selon la revendication 6, comprenant en outre

la division des repères de position ($p_i$) du champ (2) en des trajets successifs dans le temps ($T_n$) de sens de marche ($R_1$, $R_2$) alternatifs ;
le lissage des repères de position ($P_{i,F}$) dans le champ (2) en vue de maximiser le parallélisme des trajets ($T_n$) ; et
la détermination d'une largeur de travail (b) à partir de la distance mutuelle entre au moins deux trajets ($T_n$).

10. Méthode selon la revendication 8 ou 9, comprenant en outre :

la détermination d'un contour (C) du champ (2) ;
l'augmentation du contour (C) du champ (2) d'une partie, de préférence de la moitié, de la largeur de travail (b) ; et
le calcul de la surface à l'intérieur du contour augmenté comme surface du champ détecté (2).

11. Méthode selon l'une quelconque des revendications 8 à 10, comprenant en outre la classification du champ (2) au moins sur la base de la largeur de travail déterminée (b).

12. Méthode selon l'une quelconque des revendications 1 à 11, **caractérisée en ce que** l'étape a) est réalisée avec un terminal mobile (4) et que les étapes b) à f) sont réalisées dans un serveur (8) distant qui reçoit la suite (FG) depuis le terminal (4) par le biais d'une liaison radio mobile (5).

*Fig. 1*

*Fig. 2*

*Fig. 3*

*Fig. 4c*

*Fig. 4b*

*Fig. 4a*

**IN DER BESCHREIBUNG AUFGEFÜHRTE DOKUMENTE**

**In der Beschreibung aufgeführte Patentdokumente**

- US 20090118904 A1

**In der Beschreibung aufgeführte Nicht-Patentliteratur**

- **EDSGER W. DIJKSTRA.** A note on two problems in connexion with graphs. *Numerische Mathematik,* 1959, vol. 1, 269-271
- Alpha shapes: definition and software. **N. AKKIRAJU ; H. EDELSBRUNNER ; M. FACELLO ; P. FU ; E.P. MUCKE ; C. VARELA.** Proc. Internat. Comput. Geom. Software Workshop, 1995
- **MARIUS MUJA ; DAVID G. LOWE.** Scalable Nearest Neighbor Algorithms for High Dimensional Data. *Pattern Analysis and Machine Intelligence (PAMI),* 2014, vol. 36
- The Levenberg-Marquardt algorithm: Implementation and theory. **JORGE J. MORÉ.** Numerical Analysis. 1977
- *Lecture Notes Math.,* 1978, vol. 630, 105-116